# EUROPEAN PATENT SPECIFICATION

(11) **EP 4 040 181 B1**
(45) Date of publication and mention of the grant of the patent: **04.11.2026**
(21) Application number: 22152032.3
(22) Date of filing: 18.01.2022
(51) Int. Cl.: G01S 7/02, G01S 7/35

(54) **RADAR SIGNAL PROCESSING DEVICE, RADAR DEVICE, RADAR SIGNAL PROCESSING METHOD AND RADAR SIGNAL PROCESSING PROGRAM**
RADARSIGNALVERARBEITUNGSVORRICHTUNG, RADARVORRICHTUNG, RADARSIGNALVERARBEITUNGSVERFAHREN UND RADARSIGNALVERARBEITUNGSPROGRAMM
DISPOSITIF DE TRAITEMENT DE SIGNAL RADAR, DISPOSITIF RADAR, PROCÉDÉ DE TRAITEMENT DE SIGNAL RADAR ET PROGRAMME DE TRAITEMENT DE SIGNAL RADAR

(30) Priority: 05.02.2021 JP 2021017192
(43) Date of publication of application: 10.08.2022
(73) Proprietor: FURUNO ELECTRIC CO., LTD., Nishinomiya-City, Hyogo 662-8580 (JP)
(72) Inventor: FUMIYA, Nakatani, Nishinomiya-City, 662-8580 (JP)
(74) Representative: Müller Hoffmann & Partner

(56) References cited:
- DE-A1- 102013 221 766
- US-A1- 2017 153 315
- US-A1- 2020 393 536

## Description

The disclosure relates to a radar signal processing device, a radar device, a radar signal processing method, and a radar signal processing program.

There has conventionally been known a technique of removing interference waves mixed in a radar reception signal. For example, Patent Document 1 (Japanese Patent Laid-Open No. 2018-21784) discloses a radar interference wave removal device as follows. That is, the radar interference wave removal device includes a differential absolute value calculator and an interference wave remover. The differential absolute value calculator calculates (1) an absolute value of a time derivative of real number data or complex number data of amplitude of a radar reception signal, or (2) a representative value or a moving average value in a particular time width with respect to the absolute value of the time derivative of the real number data or complex number data of the amplitude of the radar reception signal. The interference wave remover removes interference waves mixed in the radar reception signal in a time domain where (1) the absolute value of the time derivative of the amplitude of the radar reception signal or (2) the representative value or the moving average value in the particular time width with respect to the absolute value of the time derivative of the amplitude of the radar reception signal is greater than a particular threshold.
Patent Document 1: Japanese Laid-open No. 2018-21784
Patent Document 2: US Patent No. 9952312

US 2017/0153315 A1 relates to an in-vehicle radar apparatus that includes an interference determination means. The interference determination means determines presence or absence of interference between multifrequency CWs, which are radar waves, based on a beat signal generated by mixing a transmission signal and a received signal, which are radar waves.

US 2020/0393536 A1 discloses a radar sensor incorporating detection, mitigation and avoidance of mutual interference from nearby automotive radars. The normally constant start frequency sequence for linear large bandwidth FMCW chirps is replaced by a sequence of lower bandwidth chirps with start frequencies spanning the wider bandwidth and randomly ordered in time to create a pseudo random chirp hopping sequence. The reflected wave signal received is reassembled using the known hop sequence. To mitigate interference, the signal received is used to estimate collisions with other radar signals.

DE 10 2013 221766 A1 described a radar device emitting a wave and receiving a reflected wave, deriving a target positional information from the reflected wave, wherein peaks obtained in FFT are used.

There is a desire for such a technique that surpasses the technique described in Patent Document 1 and is capable of relatively accurately detecting a target based on a beat signal.
The prior art problems are solved by the subject-matter of the independent claims.

The purpose of the disclosure relates to a radar signal processing device, a radar device, a radar signal processing method, and a radar signal processing program capable of relatively accurately detecting a target based on a beat signal.

A radar signal processing device according to an aspect of the disclosure includes: a filter part configured to generate a processing signal based on a beat signal obtained from a transmitted signal and a received signal and generate a smoothed signal by filtering the processing signal using a smoothing filter in a time domain; and a detector configured to detect an interference signal included in the beat signal based on the processing signal and the smoothed signal.

In this way, by the configuration to detect the interference signal based on the smoothed signal generated by filtering the processing signal using the smoothing filter in the time domain and the processing signal, the interference signal including interference waves of various frequencies can be detected by simple processing. In addition, since the beat signal has relatively large signal level fluctuation in an azimuth direction, in the case of applying interference removal processing in the azimuth direction generally used in a conventional pulse radar to the beat signal, erroneous determination of the interference signal may occur. In contrast, by the above configuration, erroneous determination due to signal level fluctuation of the beat signal in the azimuth direction can be suppressed and the interference signal can be relatively accurately detected. Thus, a decrease in a signal-noise (SN) ratio of a power spectrum generated based on the beat signal, for example, can be suppressed. Therefore, the target can be relatively accurately detected based on the beat signal.

According to the disclosure, a target can be relatively accurately detected based on a beat signal.

The illustrated embodiments of the subject matter will be best understood by reference to the drawings, wherein like parts are designated by like numerals throughout. The following description is intended only by way of example, and simply illustrates certain selected embodiments of devices, systems, and processes that are consistent with the subject matter as claimed herein:
FIG 1 illustrates a configuration of a radar device according to an embodiment of the disclosure.
FIG 2 illustrates a configuration of a signal processor in a radar device according to an embodiment of the disclosure.
FIG 3 illustrates a configuration of an interference remover in a signal processor according to an embodiment of the disclosure.
FIG 4 illustrates an example of a beat signal received by an interference remover in a signal processor according to an embodiment of the disclosure.
FIG 5 illustrates an example of a logarithmic detection value received by a filter part in an interference remover of a signal processor and a filter signal generated by the filter part according to an embodiment of the disclosure.
FIG 6 illustrates an example of an interference determination flag generated by a detector in an interference remover of a signal processor according to an embodiment of the disclosure.
FIG 7 illustrates an example of a power spectrum generated by an FFT processor in a signal processor according to an embodiment of the disclosure.
FIG 8 illustrates an example of a logarithmic detection value generated in a radar device according to an embodiment of the disclosure.
FIG 9 illustrates an example of a logarithmic detection value generated in a radar device according to an embodiment of the disclosure.
FIG 10 illustrates a configuration of an interference remover according to a modification of an embodiment of the disclosure.
FIG 11 illustrates an example of a beat signal received by an interference remover in a signal processor according to a modification of an embodiment of the disclosure.
FIG 12 illustrates an example of an interference determination flag generated by a detector in an interference remover of a signal processor according to a modification of an embodiment of the disclosure.
FIG 13 illustrates an example of a window function generated by a window function generator in an interference remover of a signal processor according to a modification of an embodiment of the disclosure.
FIG 14 illustrates an example of a beat signal after FFT preprocessing by a correction part in an interference remover according to an embodiment of the disclosure.
FIG 15 illustrates an example of a beat signal after FFT preprocessing by a correction part in an interference remover according to an embodiment of the disclosure.
FIG 16 illustrates an example of a beat signal after FFT preprocessing by a correction part in an interference remover according to a modification of an embodiment of the disclosure.
FIG 17 illustrates an example of a beat signal after FFT preprocessing by a correction part in an interference remover according to a modification of an embodiment of the disclosure.
FIG 18 illustrates an example of a power spectrum generated by an FFT processor in a signal processor according to an embodiment of the disclosure.
FIG 19 is a flowchart defining an example of an operation procedure when a radar device according to an embodiment of the disclosure performs FFT preprocessing.

Hereinafter, embodiments of the disclosure are described with reference to the drawings. The same or equivalent portions in the drawings are assigned with the same reference numerals and description thereof will not be repeated. In addition, at least some of the embodiments described below may be arbitrarily combined.

### [Configuration and Basic Operation]

### <Radar Device>

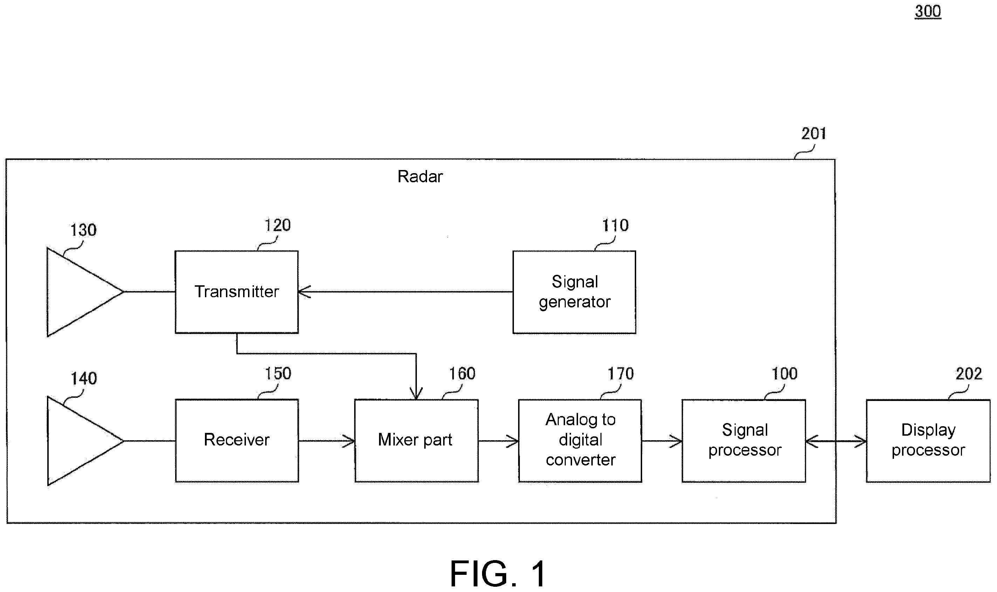

FIG 1 illustrates a configuration of a radar device according to an embodiment of the disclosure.

Referring to FIG 1, a radar device 300 includes a radar 201 and a display processor 202. The radar 201 includes a signal generator 110, a transmitter 120, a transmitting antenna 130, a receiving antenna 140, a receiver 150, a mixer part 160, an analog to digital (A/D) converter 170, and a signal processor 100. The signal processor 100 is an example of a radar signal processing device. For example, the radar device 300 is a frequency modulated continuous wave (FM-CW) radar device and is mounted on a ship. The radar device 300 may perform processing configured to display, on a display device (not shown), an echo image indicating the presence or absence of a target in a detection target area being a domain monitored by the ship as well as a distance between the radar device 300 and the target.

The radar 201 may output, to the display processor 202, echo data indicating a detection result of the target in a divided target area being a domain obtained by dividing the detection target area into multiple domains. The transmitting antenna 130 and the receiving antenna 140 may rotate so that an azimuth angle in a radio wave radiation direction of the transmitting antenna 130 changes by a particular angle every particular sweep period T. The radar 201 may output, to the display processor 202, the echo data in multiple divided target areas for each sweep period T.

The display processor 202 may perform processing configured to display the echo image in the detection target area on the display device based on multiple echo data received from the radar 201.

### <Radar>

The signal generator 110 may repeatedly generate an analog signal of a particular pattern and output the same to the transmitter 120. More specifically, in the sweep period T, the signal generator 110 may output, to the transmitter 120, an analog signal generated by a modulation method such as an FM-CW method and having a frequency increasing by a particular amount per unit time. Specifically, for example, the signal generator 110 includes a voltage generator and a voltage-controlled oscillator (VCO). In the sweep period T, the voltage generator may generate an FM modulated voltage having a magnitude increasing at a constant rate and output the same to the VCO. The VCO may generate an analog signal having a frequency corresponding to the magnitude of the FM modulated voltage received from the voltage generator and output the same to the transmitter 120.

The transmitter 120 may transmit a transmitted signal. More specifically, in the sweep period T, the transmitter 120 may generate a transmitted signal of a radio frequency (RF) band based on the analog signal received from the signal generator 110, and output the generated transmitted signal of the RF band to the divided target area via the transmitting antenna 130 that rotates with rotation of the radar 201. The transmitter 120 may output the generated transmitted signal of the RF band to the mixer part 160. Specifically, for example, the transmitter 120 includes a mixer and a power amplifier. This mixer may generate the transmitted signal of the RF band based on the analog signal received from the signal generator 110, and output the generated transmitted signal to the power amplifier and the mixer part 160. In the transmitter 120, the power amplifier may amplify the transmitted signal received from the mixer, and output the amplified transmitted signal to the divided target area via the transmitting antenna 130.

The receiver 150 may receive a reflected signal obtained by reflecting the transmitted signal by the target. More specifically, the receiver 150 may receive a reflected signal of the RF band via the receiving antenna 140 that rotates with rotation of the radar 201. The reflected signal of the RF band is obtained by reflecting the transmitted signal transmitted from the transmitting antenna 130 by the target in the divided target area. The receiver 150 may also receive, via the receiving antenna 140, an interference wave transmitted by an interfering object. The interfering object is, for example, a pulse radar device located in the divided target area or outside the divided target area. The receiver 150 may output a signal received via the receiving antenna 140 to the mixer part 160. Specifically, for example, the receiver 150 includes a low noise amplifier. The low noise amplifier may amplify a received signal of the RF band received via the receiving antenna 140, and output the amplified received signal to the mixer part 160.

The mixer part 160 may generate a beat signal of the transmitted signal transmitted from the radar device 300 and the received signal received by the radar device 300. Here, the beat signal is a signal having a frequency component of a difference between a frequency component of the transmitted signal transmitted by the transmitter 120 and a frequency component of the received signal received by the receiver 150. More specifically, the mixer part 160 includes, for example, two mixers. A branch part (not shown) may branch the transmitted signal output from the transmitter 120 and apply a phase difference of 90 ° to the transmitted signals obtained by branching, and output the same to each mixer in the mixer part 160. The branch part (not shown) may branch the received signal output from the receiver 150 and output the same to each mixer in the mixer part 160. The two mixers in the mixer part 160 may respectively multiply the transmitted signals and received signals, thereby generating an analog beat signal SA composed of a pair of an I signal Si and a Q signal Sq and outputting the same to the A/D converter 170.

The A/D converter 170 may convert the analog beat signal SA received from the mixer part 160 to a beat signal SD being a digital signal composed of a pair of the I signal Si and the Q signal Sq. More specifically, the A/D converter 170 may perform sampling at a particular sampling frequency every sweep period T, thereby generating N beat signals SD composed of pairs of N I signals Si and N Q signals Sq and outputting the same to the signal processor 100. N is an integer equal to or greater than 2, and is, for example, 1024.

The signal processor 100 may process the N beat signals SD received from the A/D converter 170 in each sweep period T, thereby generating the echo data indicating the detection result of the target in the divided target area for each sweep period T. The signal processor 100 may output the generated echo data to the display processor 202. Hereinafter, the beat signal SD received by the signal processor 100 from the A/D converter 170 in the sweep signal T and having a sample number n is also referred to as a beat signal SD(n). n is an integer equal to or greater than 1 and equal to or less than N, and corresponds to an elapsed time from the start of the sweep period T. The beat signal SD(n) is a signal composed of a pair of an I signal Si(n) having the sample number n and a Q signal Sq(n) having the sample number n.

The radar device 300 may be configured to include, instead of the transmitting antenna 130 and the receiving antenna 140, one antenna that functions as the transmitting antenna 130 and the receiving antenna 140. In this case, for example, the transmitter 120 may transmit the transmitted signal to the transmitting antenna 130 via a circulator. For example, the receiver 150 may receive the received signal from the receiving antenna 140 via the circulator.

### <Display Processor>

The display processor 202 may, based on the echo data for each divided target area that is received from the signal processor 100, generate integrated data being the echo data in the detection target area, and may, based on the generated integrated data, perform the processing configured to display the echo image in the detection target area on the display device (not shown).

### <Signal Processor>

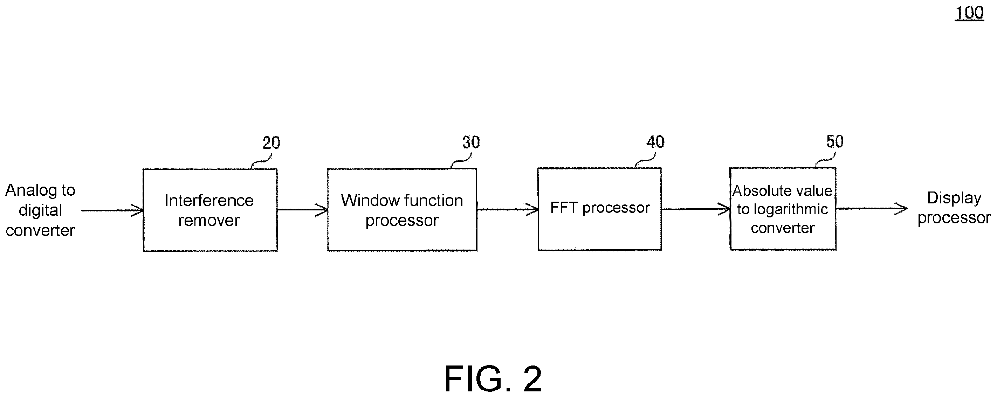

FIG 2 illustrates a configuration of a signal processor in a radar device according to an embodiment of the disclosure. Referring to FIG 2, the signal processor 100 includes an interference remover 20, a window function processor 30, an FFT processor 40, and an absolute value to logarithmic processor 50.

The interference remover 20 may receive N beat signals SD from the A/D converter 170, and perform FFT preprocessing configured to remove an interference component (a component based on an interference wave) from components of the received beat signal SD every sweep period T. The interference remover 20 may output a beat signal SD from which the interference component has been removed by the FFT preprocessing to the window function processor 30. The FFT preprocessing performed by the interference remover 20 will be described in detail later.

The window function processor 30 may perform window function processing configured to multiply the N beat signals SD after FFT processing received from the interference remover 20 by a particular window function every sweep period T. The window function processor 30 may output the beat signal SD after window function processing to the FFT processor 40.

The FFT processor 40 may generate a power spectrum P by performing FFT processing on the N beat signals SD received from the window function processor 30, and output the generated power spectrum P to the absolute value to logarithmic converter 50 every sweep period T. For example, a frequency in the power spectrum P generated by the FFT processor 40 corresponds to the distance between the radar device 300 and the target.

The absolute value to logarithmic converter 50 may generate the echo data by logarithmic transformation of a power spectrum PA indicating an absolute value of the power spectrum P received from the FFT processor 40, and output the generated echo data to the display processor 202.

### <Interference Remover>

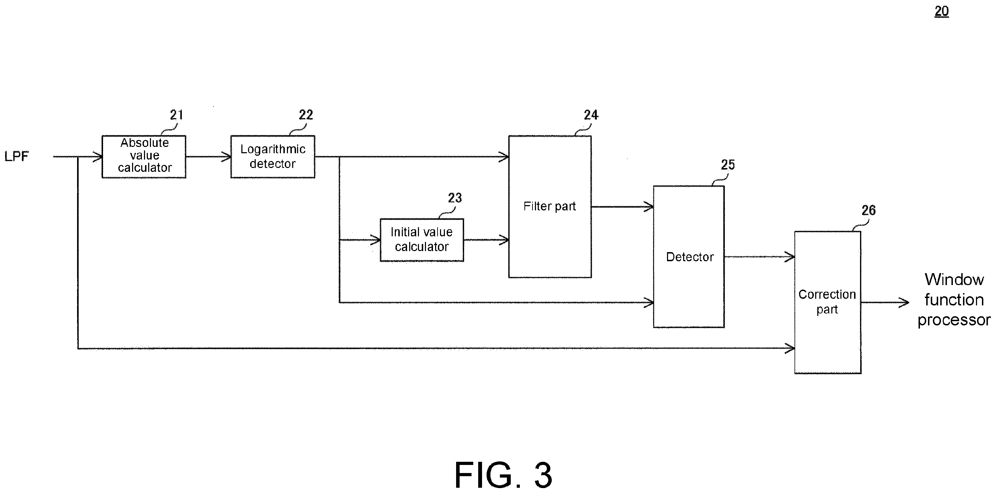

FIG 3 illustrates a configuration of an interference remover in a signal processor according to an embodiment of the disclosure. Referring to FIG 3, the interference remover 20 includes an absolute value calculator 21, a logarithmic detector 22, an initial value calculator 23, a filter part 24, a detector 25, and a correction part 26. As described above, the interference remover 20 may perform the FFT preprocessing configured to remove the interference component from the components of the beat signal SD received from the A/D converter 170. The absolute value calculator 21 and the correction part 26 may receive the beat signal SD(n) composed of a pair of the I signal Si(n) and the Q signal Sq(n) from the A/D converter 170.

The absolute value calculator 21 may receive the beat signal SD from the A/D converter 170 and calculate an absolute value a of the received beat signal SD. More specifically, the absolute value calculator 21 may calculate the sum of the square of the value of the I signal Si(n) and the square of the value of the Q signal Sq(n) as an absolute value a(n), and output the calculated absolute value a(n) to the logarithmic detector 22.

The logarithmic detector 22 may calculate a logarithmic detection value B by performing logarithmic detection of the absolute value a received from the absolute value calculator 21. More specifically, the logarithmic calculator 22 may receive the absolute value a(n) from the absolute value calculator 21 and calculate 10×log{a(n)} as a logarithmic detection value B(n), and output the calculated logarithmic detection value B(n) to the initial value calculator 23, the filter part 24, and the detector 25. Here, Log{A} represents a common logarithm of A.

The initial value calculator 23 may calculate an average value AvB of the logarithmic detection value B corresponding to an initial particular time in each sweep period T. More specifically, the initial value calculator 23 may calculate the average value AvB from a first logarithmic detection value B(1) to a kth logarithmic detection value B(k) in the sweep period T. Here, k is an integer equal to or greater than 2 and less than N, and is, for example, 8. The initial value calculator 23 may output the calculated average value AvB to the filter part 24.

The filter part 24 may perform filtering on an nth logarithmic detection value B(n) being a signal based on the nth beat signal SD(n) using a smoothing filter in a time domain, thereby generating an nth filter signal A(n). Herein, the filter signal is also referred to as a smoothed signal. The filter part 24 may output the generated filter signal A(n) to the detector 25. The logarithmic detection value B(n) is an example of a processing signal. For example, the smoothing filter is an infinite impulse response (IIR) filter, which is one of digital filters.

For example, the filter part 24 may change a setting of the smoothing filter based on a comparison result between a filter signal A(n-1) and the logarithmic detection value B(n) input to the smoothing filter. Specifically, the filter part 24 may change a filtering equation as the setting of the smoothing filter.

More specifically, in the case where the filter signal A(n-1) and the logarithmic detection value B(n) satisfy the following Equation (1), the filter part 24 may generate the filter signal A(n) according to the following Equation (3). On the other hand, in the case where the filter signal A(n-1) and the logarithmic detection value B(n) satisfy the following Equation (2), the filter part 24 may generate the filter signal A(n) according to the following Equation (4). A particular threshold ThA in Equations (1) and (2) is a value set in advance in order to prevent the filter signal A(n) generated by the filter part 24 from following an increase in the logarithmic detection value B(n) due to an interference wave received by the receiver 150. C in Equation (3) is a particular coefficient having a value equal to or greater than zero and equal to or less than 1. $B \left(n\right) - A \left(n-1\right) ≦ ThA$ (1) $B \left(n\right) - A \left(n-1\right) > ThA$ (2) $A \left(n\right) = B \left(n\right) \times C + A \left(n-1\right) \times \left(1-C\right)$ (3) $A \left(n\right) = A \left(n-1\right)$ (4)

Here, for example, the filter part 24 may determine the average value AvB of multiple logarithmic detection values B(n) as an initial value of the filter signal A(n). More specifically, the filter part 24 may output, as the initial value of the filter signal A(n), the average value AvB received from the initial value calculator 23 to the detector 25 in each sweep period T regardless of Equations (1) to (4).

For example, in the case where a change in the logarithmic detection value B(n) input to the smoothing filter satisfies a particular condition, the filter part 24 may change the smoothing filter to a setting to further suppress a temporal change in the filter signal A(n). More specifically, in the case where Equation (2) is satisfied due to a large change in the logarithmic detection value B(n) input to the smoothing filter, the filter part 24 may set the nth filter signal A(n) to the same value as an (n-1)th filter signal A(n-1), thereby suppressing a temporal change in the filter signal A(n).

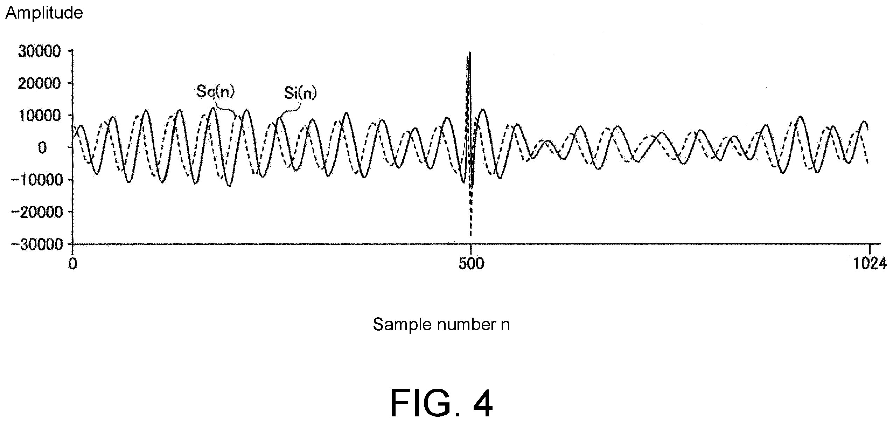

FIG 4 illustrates an example of a beat signal received by an interference remover in a signal processor according to an embodiment of the disclosure. In FIG 4, the horizontal axis indicates the value of the sample number n of the beat signal SD(n), and the vertical axis indicates amplitude. The solid line in FIG 4 indicates the I signal Si(n) in the beat signal SD(n). The broken line in FIG 4 indicates the Q signal Sq(n) in the beat signal SD(n).

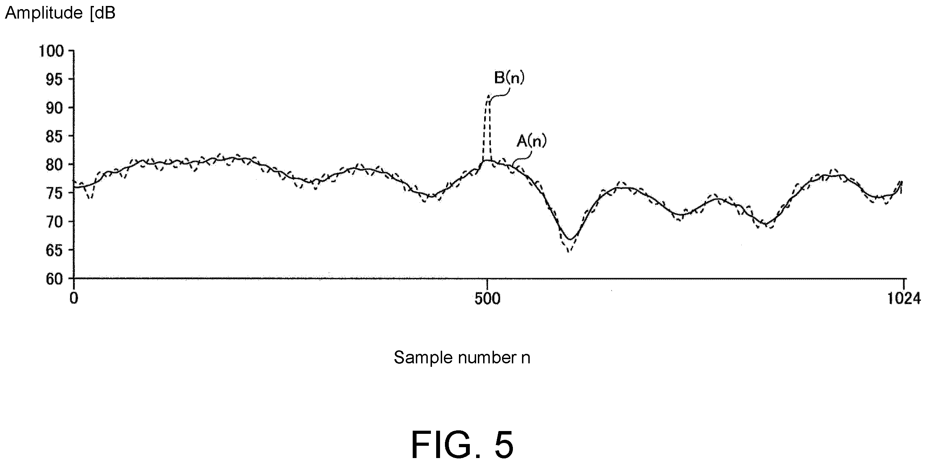

FIG 5 illustrates an example of a logarithmic detection value received by a filter part in an interference remover of a signal processor and a filter signal generated by the filter part according to an embodiment of the disclosure. In FIG 5, the horizontal axis indicates the value of the sample number n of the beat signal SD(n), and the vertical axis indicates amplitude [dB]. The solid line in FIG 5 indicates the filter signal A(n) generated by the filter part 24. The broken line in FIG 5 indicates the logarithmic detection value B(n) received by the filter part 24.

Referring to FIG 4 and FIG 5, since the amplitude of the I signal Si(n) and the Q signal Sq(n) when the sample number n is about 500 may sharply increase due to the influence of an interference wave, the level of an approximately 500th logarithmic detection value B(n) may suddenly become a large value. While the filter signal A(n) generated by the filter part 24 follows a gradual change in the level of the logarithmic detection value B(n), the filter signal A(n) does not follow a sudden change in the level of the logarithmic detection value B(n).

The detector 25 may detect an interference signal included in the beat signal SD(n) based on the logarithmic detection value B(n) and the filter signal A(n).

For example, the detector 25 may detect the interference signal based on a comparison result between the logarithmic detection value B(n) and the filter signal A(n). More specifically, the detector 25 may detect the interference signal based on a difference or ratio between the logarithmic detection value B(n) and the filter signal A(n).

Specifically, in the case where the logarithmic detection value B(n) received from the logarithmic detector 22 and the filter signal A(n) received from the filter part 24 satisfy the following Equation (5), the detector 25 may determine that the interference signal is included in the beat signal SD(n). ThB in Equation (5) is a particular threshold. $B \left(n\right) - A \left(n\right) ≧ ThB$ (5)

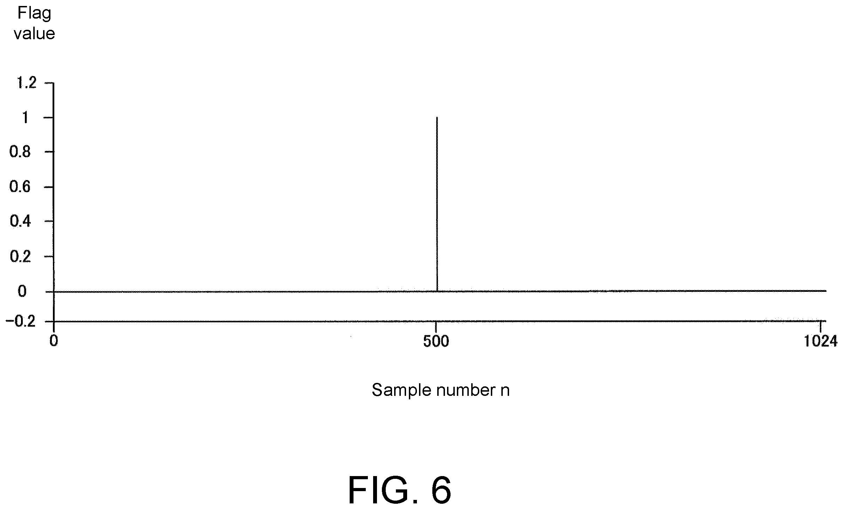

FIG 6 illustrates an example of an interference determination flag generated by a detector in an interference remover of a signal processor according to an embodiment of the disclosure. In FIG 6, the horizontal axis indicates the value of the sample number n of the beat signal SD(n), and the vertical axis indicates flag value.

Referring to FIG 6, the detector 25 may generate an interference determination flag in which a flag value corresponding to the sample number n of the beat signal SD(n) determined to include the interference signal is 1, and a flag value corresponding to the sample number n of the beat signal SD(n) determined to not include the interference signal is zero. Specifically, the detector 25 may generate the interference determination flag in which the flag value is 1 when the sample number n is about 500. The detector 25 may output the generated interference determination flag to the correction part 26.

The correction part 26 may perform signal processing (that is, FFT preprocessing) configured to attenuate an amplitude of the interference signal. More specifically, the correction part 26 may receive the beat signal SD(n) from the A/D converter 170, and perform the FFT preprocessing configured to attenuate the amplitude of the beat signal SD(n) in the received beat signal SD(n) that has the sample number n when the flag value in the interference determination flag received from the detector 25 is 1. Hereinafter, the sample number n when the flag value in the interference determination flag is 1 is defined as nx.

For example, as the FFT preprocessing, the correction part 26 may replace the amplitude of an I signal Si(nx) and a Q signal Sq(nx) in the I signal Si(n) and Q signal Sq(n) in the received beat signal SD(n) that have the sample number nx with zero. The correction part 26 may output the beat signal SD(n) after FFT preprocessing to the window function processor 30.

Referring again to FIG 2, as described above, the window function processor 30 may perform the window function processing on the beat signal SD(n) after FFT processing received from the interference remover 20, and output the beat signal SD(n) after window function processing to the FFT processor 40. Then, the FFT processor 40 may generate a power spectrum by performing the FFT processing on the beat signal SD received from the window function processor 30.

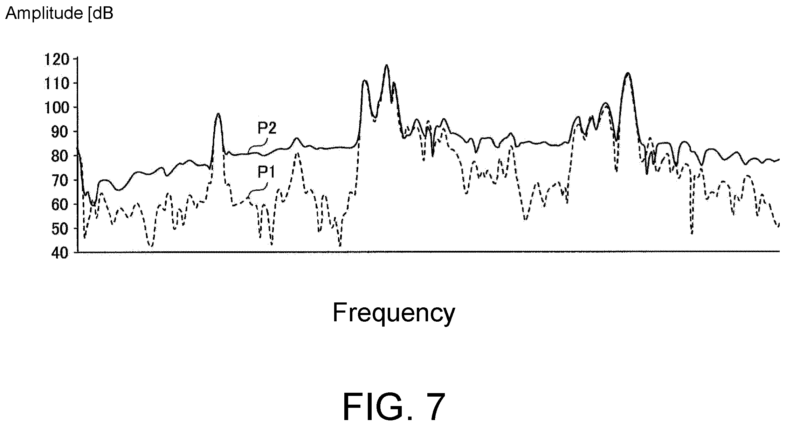

FIG 7 illustrates an example of a power spectrum generated by an FFT processor in a signal processor according to an embodiment of the disclosure. In FIG 7, the horizontal axis indicates frequency and the vertical axis indicates amplitude [dB]. The broken line in FIG 7 indicates an example of a power spectrum P1 generated by the FFT processor 40 in the case where the FFT preprocessing is performed by the interference remover 20. The solid line in FIG 7 indicates an example of a power spectrum P2 generated by the FFT processor 40 in the case where no FFT preprocessing is performed.

Referring to FIG 7, the power spectrum P2 generated by the FFT processor 40 in the case where no FFT preprocessing is performed has a low SN ratio due to the influence of the interference wave. In contrast, the power spectrum P1 generated by the FFT processor 40 in the case where the FFT preprocessing is performed by the interference remover 20 has a higher SN ratio than the power spectrum P2, and a peak can be relatively accurately detected. Accordingly, the target in the detection target area can be correctly detected.

By the way, for example, in a conventional pulse radar, it is a general detection method that the interference signal is detected based on a comparison result between signal levels of received signals in the azimuth direction. Specifically, in the conventional pulse radar, for example, the signal levels of the received signals in the divided target areas adjacent to each other are compared, and it is determined that the received signal having a protruding amplitude as compared with the received signal in the adjacent divided target area includes the interference signal.

However, in the case of applying the above detection method used in the pulse radar to, for example, an FM-CW radar device, the SN ratio of the power spectrum may decrease. Hereinafter, a specific description will be given.

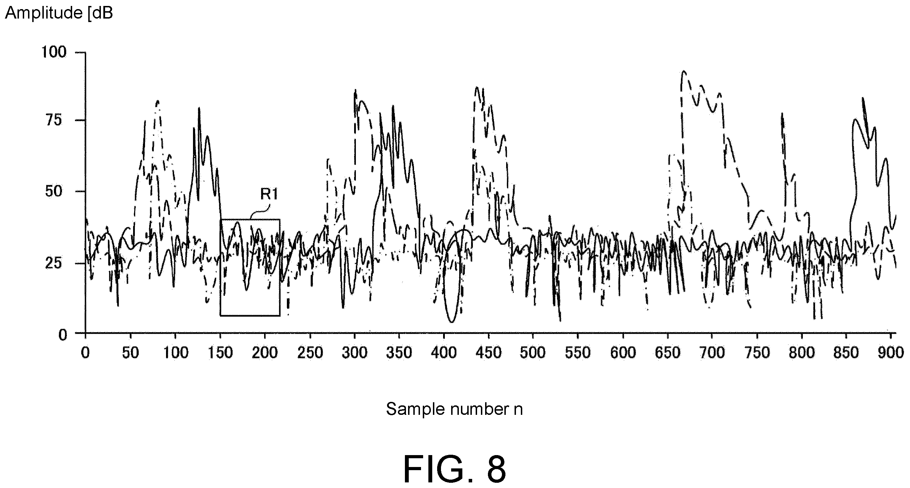

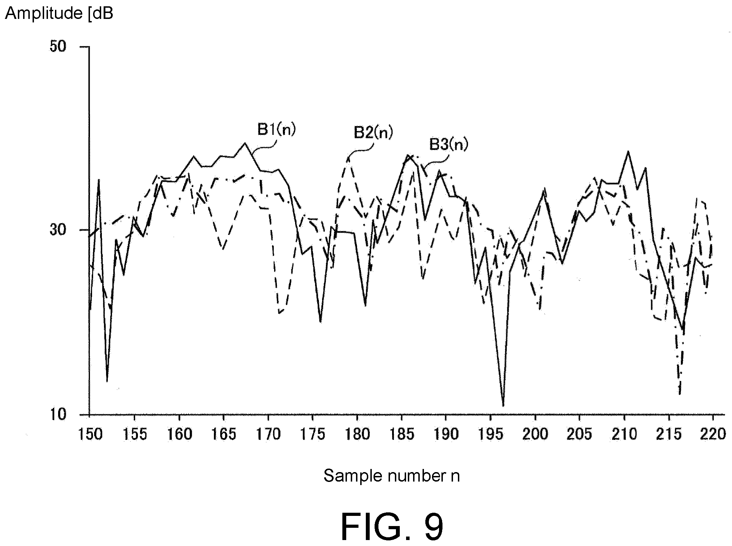

FIG 8 and FIG 9 illustrate an example of a logarithmic detection value generated in a radar device according to an embodiment of the disclosure. FIG 9 is an enlarged view of a region R1 in FIG 8. In FIG 8 and FIG 9, the horizontal axis indicates the value of the sample number n of the beat signal SD(n), and the vertical axis indicates amplitude [dB]. The solid line in FIG 8 and FIG 9 indicates a logarithmic detection value B1(n) based on a beat signal SD1(n) corresponding to a divided target area Ar1. The broken line in FIG 8 and FIG 9 indicates a logarithmic detection value B2(n) based on a beat signal SD2(n) corresponding to a divided target area Ar2 adjacent to the divided target area Ar1. The chain line in FIG 8 and FIG 9 indicates a logarithmic detection value B3(n) based on a beat signal SD3(n) corresponding to a divided target area Ar3 adjacent to the divided target area Ar2.

In FIG 8, in the logarithmic detection values B1(n), B2(n), and B3(n), protrusion of the amplitude exceeding, for example, 50 dB, is due to the influence of the interference wave.

Referring to FIG 9, the logarithmic detection values B1(n), B2(n), and B3(n) may have different amplitudes even if the amplitude is 50 dB or less and there is no influence from the interference wave. Therefore, in the FM-CW radar device, in the case of attempting to detect the interference signal based on a comparison result between signal levels of the logarithmic detection value B in the azimuth direction as in the above detection method in the pulse radar, it may be erroneously determined that the logarithmic detection value B includes the interference signal when there is no influence from the interference wave. When the erroneously determined interference signal is removed, the SN ratio of the generated power spectrum may decrease.

In contrast, in the signal processor 100 according to an embodiment of the disclosure, compared to the configuration to detect the interference signal based on the comparison result between the signal levels of the logarithmic detection value B in the azimuth direction, by the configuration to detect the interference signal based on the filter signal generated by filtering the logarithmic detection value B using the smoothing filter in the time domain and the logarithmic detection value B, erroneous determination of the interference signal can be suppressed and the interference signal can be more accurately detected. Thus, a decrease in the SN ratio of the power spectrum P generated based on the beat signal SD can be suppressed.

### [Modifications]

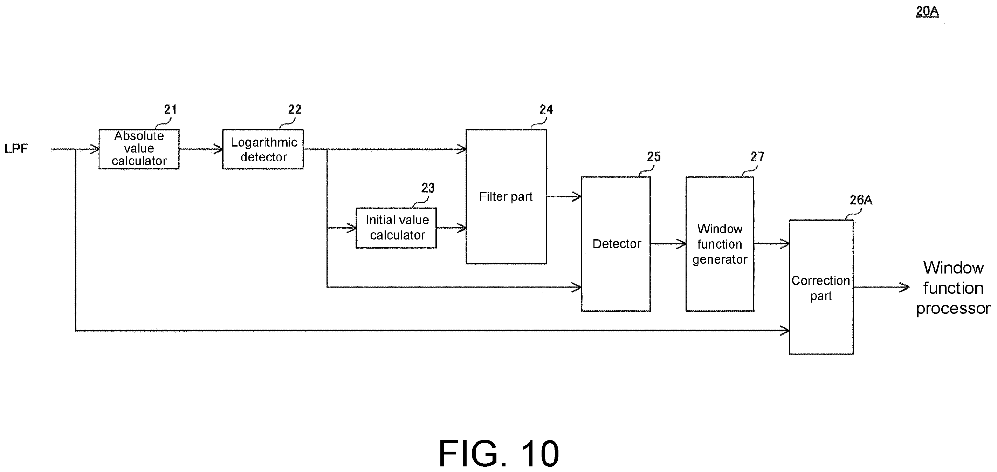

FIG 10 illustrates a configuration of an interference remover according to a modification of an embodiment of the disclosure. Referring to FIG 10, compared to the interference remover 20, an interference remover 20A includes a correction part 26A instead of the correction part 26, and further includes a window function generator 27. The signal processor 100 may be configured to include the interference remover 20A instead of the interference remover 20.

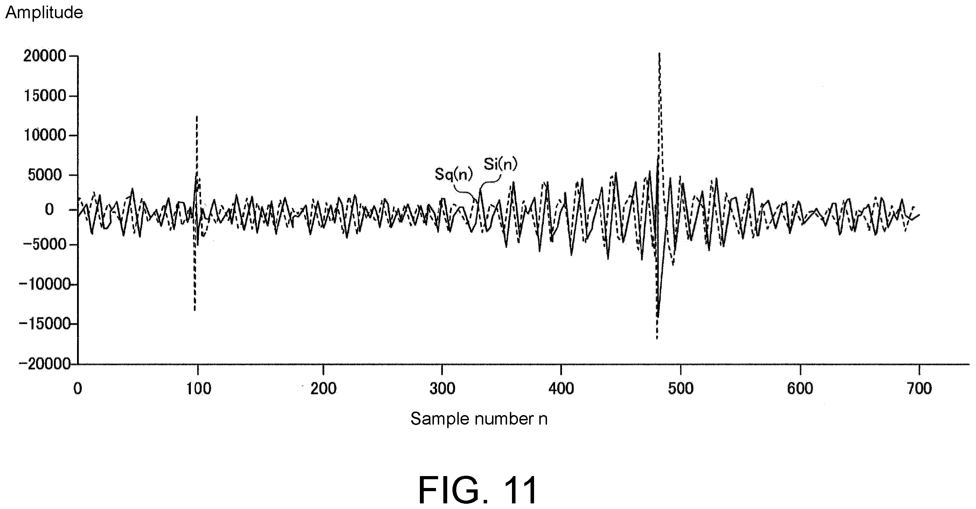

FIG 11 illustrates an example of a beat signal received by an interference remover in a signal processor according to a modification of an embodiment of the disclosure. In FIG 11, the horizontal axis indicates the value of the sample number n of the beat signal SD(n), and the vertical axis indicates amplitude. The solid line in FIG 11 indicates the I signal Si(n) in the beat signal SD(n). The broken line in FIG 11 indicates the Q signal Sq(n) in the beat signal SD(n).

Referring to FIG 11, due to the influence of the interference wave, the amplitude of the I signal Si(n) and Q signal Sq(n) when the sample number n is about 100 as well as the amplitude of the I signal Si(n) and Q signal Sq(n) when the sample number n is about 480 may sharply increase.

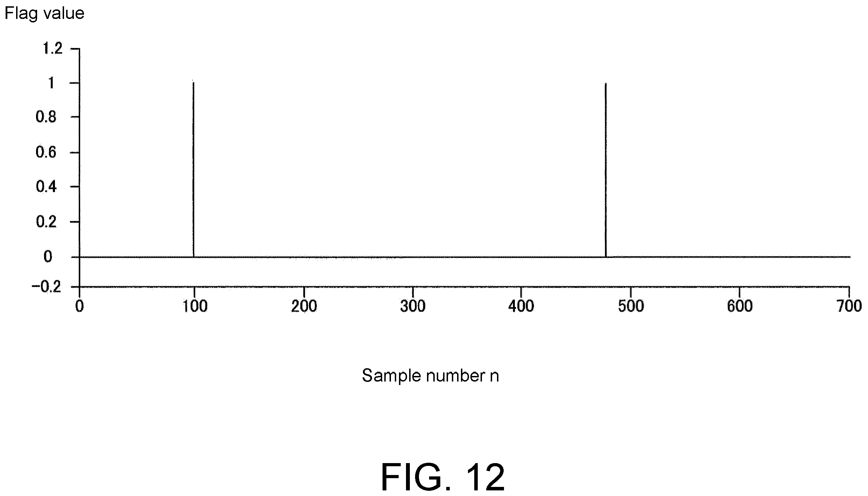

FIG 12 illustrates an example of an interference determination flag generated by a detector in an interference remover of a signal processor according to a modification of an embodiment of the disclosure. In FIG 12, the horizontal axis indicates the value of the sample number n of the beat signal SD(n), and the vertical axis indicates flag value.

Referring to FIG 12, the detector 25 may generate the interference determination flag in which the flag value when the sample number n is about 100 and the flag value when the sample number n is about 480 are 1. The detector 25 may output the generated interference determination flag to the window function generator 27.

The window function generator 27 may receive the interference determination flag from the detector 25, and generate a window function Wf based on the received interference determination flag.

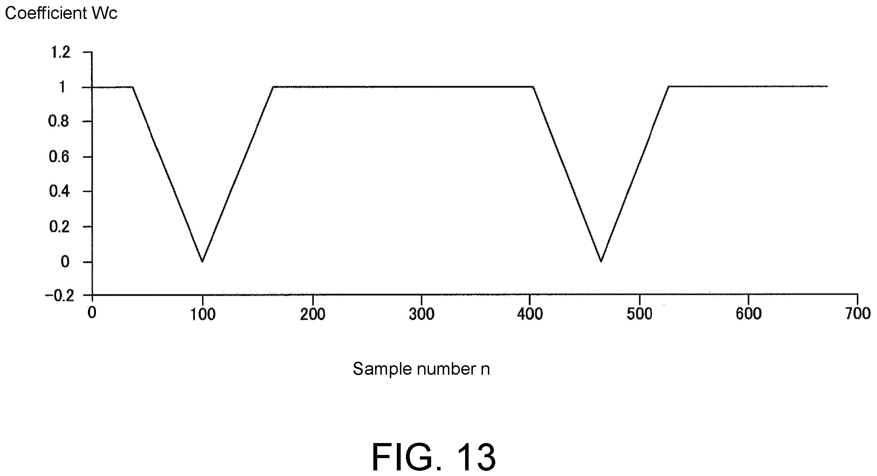

FIG 13 illustrates an example of a window function generated by a window function generator in an interference remover of a signal processor according to a modification of an embodiment of the disclosure. In FIG 13, the horizontal axis indicates the value of the sample number n of the beat signal SD(n), and the vertical axis indicates a coefficient Wc of a window function.

Referring to FIG 13, the window function generator 27 may generate the window function Wf in which the coefficient Wc of the sample number nx is zero when the flag value in the interference determination flag is 1, and the coefficient Wc may linearly increase and approach 1 as the sample number n increases or decreases from nx. The window function generator 27 may output the generated window function Wf to the correction part 26A. The window function generator 27 may be configured to generate the window function Wf in which the coefficient Wc increases curvedly like, for example, a sine curve, as the sample number n increases or decreases from nx.

By multiplying the beat signal SD(n) by the window function Wf, the correction part 26A may perform the signal processing (that is, FFT preprocessing) configured to attenuate the amplitude of the beat signal SD(n) in a domain including the interference signal. More specifically, the correction part 26A may receive the beat signal SD(n) from the A/D converter 170, and perform the window function processing configured to multiply the received beat signal SD(n) by the window function Wf received from the window function generator 27. The correction part 26A may output the beat signal SD(n) after window function processing to the window function processor 30.

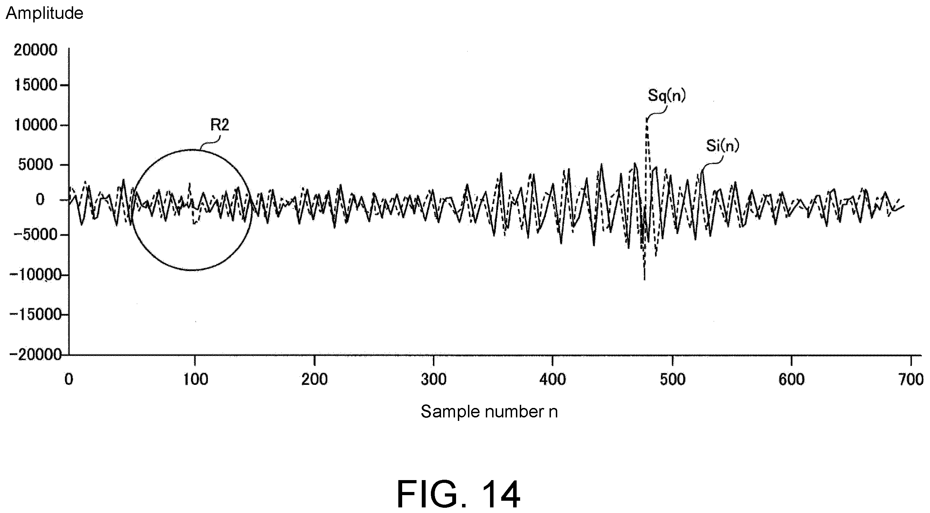

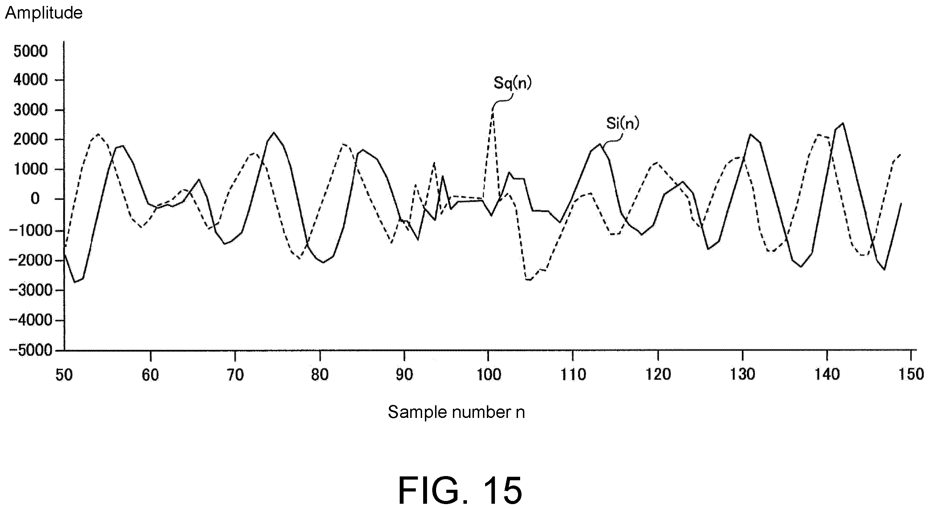

FIG 14 and FIG 15 illustrate an example of a beat signal after FFT preprocessing by a correction part in an interference remover according to an embodiment of the disclosure. FIG 15 is an enlarged view of a region R2 in FIG 14. In FIG 14 and FIG 15, the horizontal axis indicates the value of the sample number n of the beat signal SD(n), and the vertical axis indicates amplitude. The solid line in FIG. 14 and FIG 15 indicates the I signal Si(n) in the beat signal SD(n) after the FFT preprocessing by the correction part 26. The broken line in FIG 14 and FIG 15 indicates the Q signal Sq(n) in the beat signal SD(n) after the FFT preprocessing by the correction part 26.

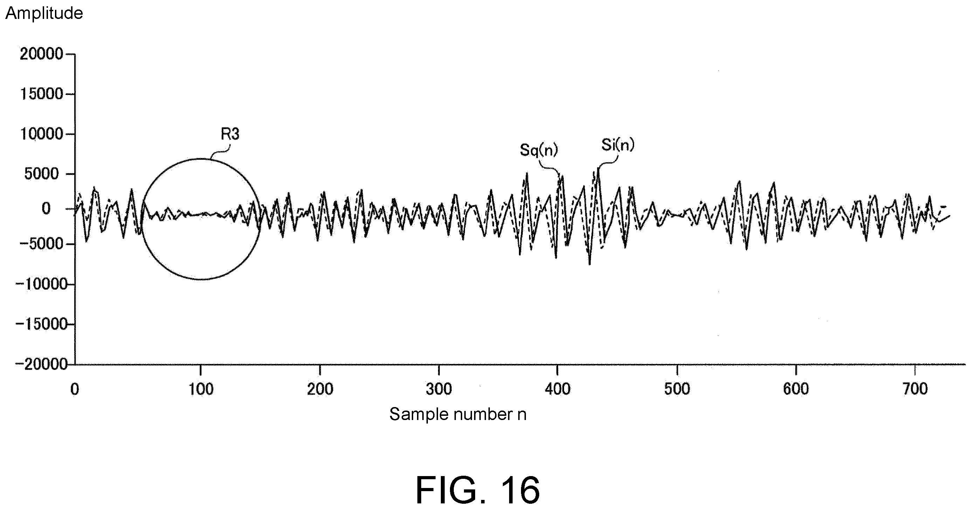

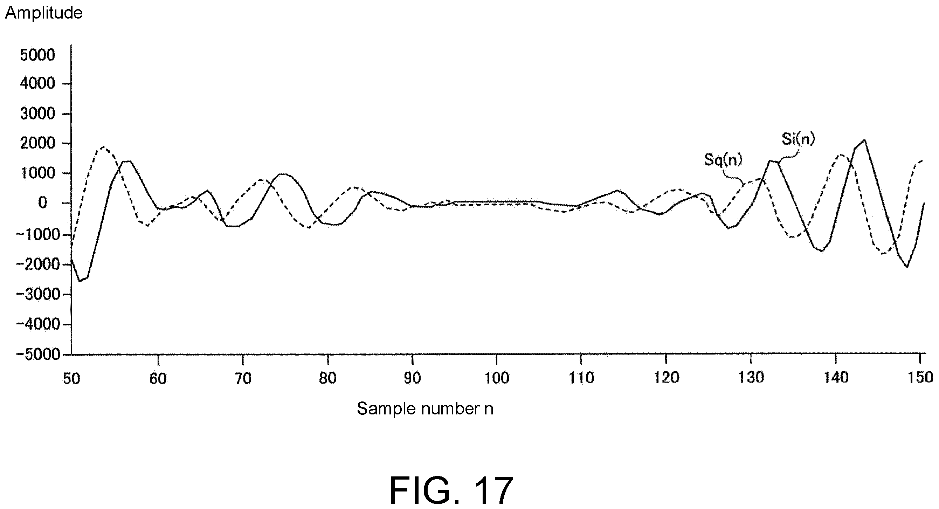

FIG 16 and FIG 17 illustrate an example of a beat signal after FFT preprocessing by a correction part in an interference remover according to a modification of an embodiment of the disclosure. FIG 17 is an enlarged view of a region R3 in FIG 16. In FIG 16 and FIG 17, the horizontal axis indicates the value of the sample number n of the beat signal SD(n), and the vertical axis indicates amplitude. The solid line in FIG 16 and FIG 17 indicates the I signal Si(n) in the beat signal SD(n) after the FFT preprocessing by the correction part 26A. The broken line in FIG 16 and FIG 17 indicates the Q signal Sq(n) in the beat signal SD(n) after the FFT preprocessing by the correction part 26A.

Referring to FIG 15 and FIG 17, in the beat signal SD(n) after the FFT preprocessing by the correction part 26, by replacing the amplitude of the I signal Si(nx) and Q signal Sq(nx) having the sample number nx when the flag value in the interference determination flag is 1, the I signal Si(n) and Q signal Sq(n) having the sample number n before and after nx may sharply change, that is, discontinuity may occur. In contrast, in the beat signal SD(n) after the FFT preprocessing by the correction part 26A, by multiplying the beat signal SD(n) by the window function Wf, the amplitude of the I signal Si(n) and Q signal Sq(n) having the sample number n before and after nx may gradually change without suddenly increasing or decreasing. Thus, no discontinuity occurs.

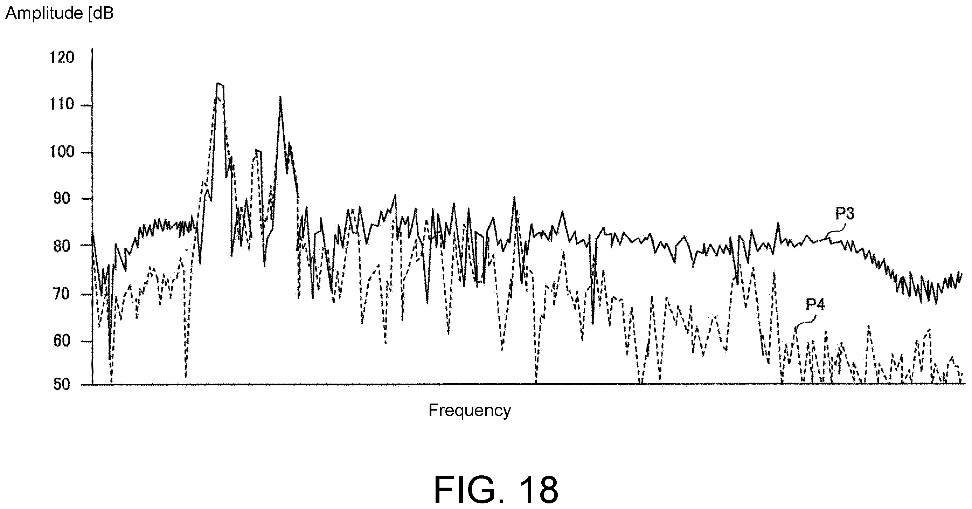

FIG 18 illustrates an example of a power spectrum generated by an FFT processor in a signal processor according to an embodiment of the disclosure. In FIG 18, the horizontal axis indicates frequency and the vertical axis indicates amplitude [dB]. The solid line in FIG 18 indicates an example of a power spectrum P3 generated by the FFT processor 40 in the case where the FFT preprocessing is performed by the interference remover 20. The broken line in FIG 18 indicates an example of a power spectrum P4 generated by the FFT processor 40 in the case where the FFT preprocessing is performed by the interference remover 20A according to a modification.

Referring to FIG 18, since the power spectrum P4 is a power spectrum generated based on the beat signal SD(n) having no discontinuity, a range side lobe thereof is smaller than that of the power spectrum P3.

### [Operation Flow]

A radar device according to an embodiment of the disclosure includes a computer including a memory. An arithmetic processor such as a CPU in the computer may read from the memory a program including some or all of steps of the following flowchart and sequence and execute the same. The program can be installed from the outside. The program is distributed while stored in a recording medium.

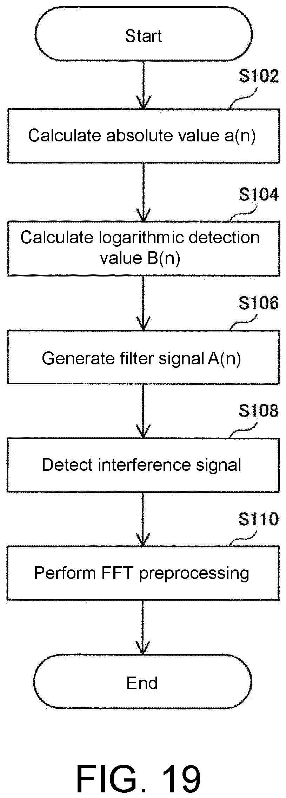

FIG 19 is a flowchart defining an example of an operation procedure when a radar device according to an embodiment of the disclosure performs FFT preprocessing.

Referring to FIG 19, firstly, the radar device 300 may calculate the absolute value a(n) of the beat signal SD(n) (step S102).

Next, the radar device 300 may calculate the logarithmic detection value B(n) by performing logarithmic detection of the absolute value a(n) (step S104).

Next, the radar device 300 may generate the filter signal A(n) by filtering the logarithmic detection value B(n) using the smoothing filter in the time domain (step S106).

Next, the radar device 300 may detect the interference signal included in the beat signal SD(n) based on the logarithmic detection value B(n) and the filter signal A(n) (step S108).

Next, the radar device 300 may perform the FFT preprocessing configured to attenuate the amplitude of the interference signal (step S110).

The signal processor 100 according to an embodiment of the disclosure is configured to include the correction part 26. However, the disclosure is not limited thereto. The signal processor 100 may be configured not to include the correction part 26. In this case, for example, the signal processor 100 may include a notifier configured to notify the outside of the signal processor 100 of a detection result of the interference signal by the detector 25.

In the signal processor 100 according to an embodiment of the disclosure, the filter part 24 is configured to determine the average value AvB of multiple logarithmic detection values B(n) as the initial value of the filter signal A(n). However, the disclosure is not limited thereto. The filter part 24 may be configured to determine a preset value as the initial value of the filter signal A(n).

By the way, there is a desire for a technique capable of relatively accurately detecting a target based on a beat signal.

For example, in the technique described in Patent Document 1, it is determined whether the interference wave is mixed in the radar reception signal based on the absolute value of the time derivative of the amplitude of the radar reception signal. In such a technique described in Patent Document 1, it is difficult to detect, for example, a low-frequency interference wave and an interference wave having a constant frequency. In the technique described in Patent Document 2, it is necessary to perform processing such as Fourier transform in order to detect the interference wave, and the circuit scale may increase.

In contrast, in the signal processor 100 according to an embodiment of the disclosure, the filter part 24 generates the filter signal A(n) by filtering the logarithmic detection value B(n) based on the beat signal SD(n) of the transmitted signal and the received signal using the smoothing filter in the time domain. The detector 25 detects the interference signal included in the beat signal SD(n) based on the logarithmic detection value B(n) and the filter signal A(n).

In this way, by the configuration to detect the interference signal based on the filter signal A(n) generated by filtering the logarithmic detection value B(n) using the smoothing filter in the time domain and the logarithmic detection value B(n), the interference signal including interference waves of various frequencies can be detected by simple processing. In addition, since the beat signal SD(n) has relatively large signal level fluctuation in the azimuth direction, in the case of applying the interference removal processing in the azimuth direction generally used in a conventional pulse radar to the beat signal SD(n), erroneous determination of the interference signal may occur. In contrast, by the above configuration, erroneous determination due to signal level fluctuation of the beat signal in the azimuth direction can be suppressed and the interference signal can be relatively accurately detected. Thus, a decrease in the SN ratio of the power spectrum P generated based on the beat signal SD(n) can be suppressed. Therefore, the target can be relatively accurately detected based on the beat signal SD(n).

In the signal processor 100 according to an embodiment of the disclosure, the filter part 24 changes the setting of the smoothing filter based on the comparison result between the filter signal A(n-1) and the logarithmic detection value B(n).

By such a configuration, the filter signal A(n) can be generated that enables relatively reliable detection of the interference signal according to the comparison result between the filter signal A(n-1) and the logarithmic detection value B(n).

In the signal processor 100 according to an embodiment of the disclosure, in the case where a change in the logarithmic detection value B(n) input to the smoothing filter satisfies a particular condition, the filter part 24 changes the smoothing filter to the setting to further suppress a temporal change in the filter signal A(n).

By such a configuration, a failure to detect the interference signal due to the filter signal A(n) following a change in the logarithmic detection value B(n) can be suppressed, and the filter signal A(n) that enables relatively reliable detection of the interference signal can be generated.

In the signal processor 100 according to an embodiment of the disclosure, the detector 25 detects the interference signal based on the comparison result between the logarithmic detection value B(n) and the filter signal A(n).

By such a configuration, the interference signal can be detected by simple processing using the generated filter signal A(n) and logarithmic detection value B(n).

In the signal processor 100 according to an embodiment of the disclosure, the detector 25 detects the interference signal based on the difference or ratio between the logarithmic detection value B(n) and the filter signal A(n).

By such a configuration, the interference signal can be relatively accurately detected by simple processing using a preset threshold regarding the difference or ratio between the filter signal A(n) and the logarithmic detection value B(n).

In the signal processor 100 according to an embodiment of the disclosure, the correction part 26 performs the signal processing configured to attenuate the amplitude of the interference signal.

By such a configuration, a component of the interference wave included in the beat signal SD(n) can be attenuated. Thus, the target can be relatively accurately detected using the beat signal SD(n) after correction processing.

In the signal processor 100 according to an embodiment of the disclosure, by multiplying the beat signal SD(n) by the window function Wf, the correction part 26A performs the signal processing configured to attenuate the amplitude of the beat signal SD(n) in the domain including the interference signal.

By such a configuration, a shape increase or decrease in the amplitude of the beat signal SD(n) after correction processing can be suppressed. Thus, an increase in range side lobe in the power spectrum P generated by subjecting the beat signal SD(n) to FFT processing can be suppressed.

In the signal processor 100 according to an embodiment of the disclosure, the filter part 24 determines the average value AvB of the logarithmic detection value B(n) at a particular time as the initial value of the filter signal A(n).

By such a configuration, the filter signal A(n) can be generated using the determined initial value and a recursive function.

In the signal processor 100 according to an embodiment of the disclosure, the smoothing filter used in the filter part 24 is an IIR filter.

By such a configuration, compared to a configuration in which the filter signal A(n) is generated using a finite impulse response (FIR) filter, the filter signal A(n) that does not follow a sharp increase or decrease in the logarithmic detection value B(n) can be generated. Thus, false detection of the interference signal can be suppressed.

The radar device 300 according to an embodiment of the disclosure includes the signal processor 100, the transmitter 120, and the receiver 150. The transmitter 120 transmits the transmitted signal. The receiver 150 receives the reflected signal obtained by reflecting the transmitted signal by the target.

By such a configuration, the radar device 300 that relatively accurately detects the target based on the beat signal SD(n) and the logarithmic detection value B(n) can be realized.

In the radar device 300 according to an embodiment of the disclosure, the transmitter 120 transmits the transmitted signal via the rotating transmitting antenna 130. The receiver 150 receives the reflected signal via the rotating receiving antenna 140.

By such a configuration, the transmitted signal can be transmitted and the reflected signal can be received in various directions. Thus, the target can be detected in a relatively wide range.

A radar signal processing method according to an embodiment of the disclosure is a radar signal processing method in the signal processor 100 used in the radar device 300. In the radar signal processing method, firstly, the filter signal A(n) may be generated by filtering the logarithmic detection value B(n) based on the beat signal SD(n) of the transmitted signal and the received signal using the smoothing filter in the time domain. Next, the signal processor 100 may detect the interference signal included in the beat signal SD(n) based on the logarithmic detection value B(n) and the filter signal A(n).

In this way, by the method for detecting the interference signal based on the filter signal A(n) generated by filtering the logarithmic detection value B(n) using the smoothing filter in the time domain and the logarithmic detection value B(n), the interference signal including interference waves of various frequencies can be detected by simple processing. In addition, since the beat signal has relatively large signal level fluctuation in the azimuth direction, in the case of applying interference removal processing in the azimuth direction generally used in a conventional pulse radar to the beat signal, erroneous determination of the interference signal may occur. In contrast, by the above method, erroneous determination due to signal level fluctuation of the beat signal SD(n) in the azimuth direction can be suppressed and the interference signal can be relatively accurately detected. Thus, a decrease in the SN ratio of the power spectrum P generated based on the beat signal SD(n) can be suppressed. Therefore, the target can be relatively accurately detected based on the beat signal SD(n).

The above embodiments are examples in all aspects and should not be interpreted as limitations. The scope of the disclosure is defined by claims instead of the above descriptions, and it is intended to include all modifications within the scope of the claims and the equivalents thereof.

### [Description of Reference Numerals]

20, 20A: interference remover
21: absolute value calculator
22: logarithmic detector
23: initial value calculator
24: filter part
25: detector
26, 26A: correction part
27: window function generator
30: window function processor
40: FFT processor
50: absolute value to logarithmic converter
100: signal processor
110: signal generator
120: transmitter
130: transmitting antenna
140: receiving antenna
150: receiver
160: mixer part
170: A/D converter
201: radar
202: display processor
300: radar device

## Claims

1. A radar signal processing device (100) comprising:
a filter part (24) configured to generate a processing signal based on a beat signal obtained from a transmitted signal and a received signal and generate a smoothed signal by filtering the processing signal using a smoothing filter in a time domain; and
a detector (25) configured to detect an interference signal included in the beat signal based on the processing signal and the smoothed signal, wherein the detector (25) is configured to detect the interference signal based on a comparison between the processing signal and the smoothed signal.

2. The radar signal processing device (100) according to claim 1, wherein the filter part (24) is configured to change a setting of the smoothing filter based on a comparison between the smoothed signal and the processing signal.

3. The radar signal processing device (100) according to claim 2, wherein the filter part (24) is configured to change the setting of the smoothing filter to further suppress a temporal change in the smoothed signal when a change in the processing signal satisfies a particular condition.

4. The radar signal processing device (100) according to any one of claims 1 to 3, wherein the detector (25) is configured to detect the interference signal, wherein the comparison is based on a difference or ratio between the processing signal and the smoothed signal.

5. The radar signal processing device (100) according to any one of claims 1 to 4, further comprising:
a correction part (26, 26A) configured to attenuate an amplitude of the interference signal.

6. The radar signal processing device (100) according to claim 5, wherein the correction part (26, 26A) is configured to attenuate an amplitude of the beat signal at a time including the interference signal by applying a window function (Wf) on the beat signal.

7. The radar signal processing device (100) according to any one of claims 1 to 6, wherein the filter part (24) is configured to determine an average value (AvB) of the processing signal at a particular time as an initial value of the smoothed signal.

8. The radar signal processing device (100) according to any one of claims 1 to 7, wherein the smoothing filter is an IIR filter.

9. A radar device (300) comprising:
the radar signal processing device (100) according to any one of claims 1 to 8;
a transmitter (120) configured to transmit the transmitted signal; and
a receiver configured to receive a reflected signal reflected by a target.

10. The radar device (300) according to claim 9, wherein
the transmitter (120) is configured to transmit the transmitted signal via a rotating antenna (130), and
the receiver (150) is configured to receive the reflected signal via a rotating antenna (140).

11. A radar signal processing method comprising:
generating a processing signal based on a beat signal obtained from a transmitted signal and a received signal;
generating a smoothed signal by filtering the processing signal using a smoothing filter in a time domain; and
detecting an interference signal included in the beat signal based on the processing signal and the smoothed signal, wherein the detecting of the interference signal is based on a comparison between the processing signal and the smoothed signal.

12. A non-transitory computer-readable medium storing a radar signal processing program, the radar signal processing program being configured to execute:
processing configured to generate a processing signal based on a beat signal obtained from a transmitted signal and a received signal;
processing configured to generate a smoothed signal by filtering the processing signal using a smoothing filter in a time domain; and
processing configured to detect an interference signal included in the beat signal based on the processing signal and the smoothed signal, wherein the detecting of the interference signal is based on a comparison between the processing signal and the smoothed signal.

## Patentansprüche

1. Radarsignalverarbeitungsvorrichtung (100), aufweisend:
einen Filterteil (24), der konfiguriert ist, um ein Verarbeitungssignal basierend auf einem Schwebungssignal zu erzeugen, das aus einem gesendeten Signal und einem empfangenen Signal erhalten wird, und um ein geglättetes Signal durch Filtern des Verarbeitungssignals unter Verwendung eines Glättungsfilters in einem Zeitbereich zu erzeugen; und
einen Detektor (25), der konfiguriert ist, um ein Interferenzsignal, das in dem Schwebungssignal enthalten ist, basierend auf dem Verarbeitungssignal und dem geglätteten Signal zu detektieren, wobei der Detektor (25) konfiguriert ist, um das Interferenzsignal basierend auf einem Vergleich zwischen dem Verarbeitungssignal und dem geglätteten Signal zu detektieren.

2. Radarsignalverarbeitungsvorrichtung (100) nach Anspruch 1, wobei der Filterteil (24) konfiguriert ist, um eine Einstellung des Glättungsfilters basierend auf einem Vergleich zwischen dem geglätteten Signal und dem Verarbeitungssignal zu ändern.

3. Radarsignalverarbeitungsvorrichtung (100) nach Anspruch 2, wobei der Filterteil (24) konfiguriert ist, um die Einstellung des Glättungsfilters zu ändern, um ferner eine zeitliche Änderung in dem geglätteten Signal zu unterdrücken, wenn eine Änderung in dem Verarbeitungssignal eine bestimmte Bedingung erfüllt.

4. Radarsignalverarbeitungsvorrichtung (100) nach einem der Ansprüche 1 bis 3, wobei der Detektor (25) konfiguriert ist, um das Interferenzsignal zu detektieren, wobei der Vergleich auf einer Differenz oder einem Verhältnis zwischen dem Verarbeitungssignal und dem geglätteten Signal basiert.

5. Radarsignalverarbeitungsvorrichtung (100) nach einem der Ansprüche 1 bis 4, ferner aufweisend:
einen Korrekturteil (26, 26A), der konfiguriert ist, um eine Amplitude des Interferenzsignals zu dämpfen.

6. Radarsignalverarbeitungsvorrichtung (100) nach Anspruch 5, wobei der Korrekturteil (26, 26A) konfiguriert ist, um eine Amplitude des Schwebungssignals zu einer Zeit, die das Interferenzsignal enthält, durch Anwenden einer Fensterfunktion (Wf) auf das Schwebungssignal zu dämpfen.

7. Radarsignalverarbeitungsvorrichtung (100) nach einem der Ansprüche 1 bis 6, wobei der Filterteil (24) konfiguriert ist, um einen Durchschnittswert (AvB) des Verarbeitungssignals zu einer bestimmten Zeit als einen Anfangswert des geglätteten Signals zu bestimmen.

8. Radarsignalverarbeitungsvorrichtung (100) nach einem der Ansprüche 1 bis 7, wobei das Glättungsfilter ein IIR-Filter ist.

9. Radarvorrichtung (300), aufweisend:
die Radarsignalverarbeitungsvorrichtung (100) nach einem der Ansprüche 1 bis 8;
einen Sender (120), der konfiguriert ist, um das gesendete Signal zu senden; und
einen Empfänger, der konfiguriert ist, um ein reflektiertes Signal zu empfangen, das von einem Ziel reflektiert wird.

10. Radarvorrichtung (300) nach Anspruch 9, wobei
der Sender (120) konfiguriert ist, um das gesendete Signal über eine rotierende Antenne (130) zu senden, und
der Empfänger (150) konfiguriert ist, um das reflektierte Signal über eine rotierende Antenne (140) zu empfangen.

11. Radarsignalverarbeitungsverfahren, aufweisend:
Erzeugen eines Verarbeitungssignals basierend auf einem Schwebungssignal, das aus einem gesendeten Signal und einem empfangenen Signal erhalten wird;
Erzeugen eines geglätteten Signals durch Filtern des Verarbeitungssignals unter Verwendung eines Glättungsfilters in einem Zeitbereich; und
Detektieren eines Interferenzsignals, das in dem Schwebungssignal enthalten ist, basierend auf dem Verarbeitungssignal und dem geglätteten Signal, wobei das Detektieren des Interferenzsignals auf einem Vergleich zwischen dem Verarbeitungssignal und dem geglätteten Signal basiert.

12. Nichtflüchtiges computerlesbares Medium, das ein Radarsignalverarbeitungsprogramm speichert, wobei das Radarsignalverarbeitungsprogramm konfiguriert ist, um auszuführen:
eine Verarbeitung, die konfiguriert ist, ein Verarbeitungssignal basierend auf einem Schwebungssignal zu erzeugen, das aus einem gesendeten Signal und einem empfangenen Signal erhalten wird;
eine Verarbeitung, die konfiguriert ist, ein geglättetes Signal durch Filtern des Verarbeitungssignals unter Verwendung eines Glättungsfilters in einem Zeitbereich zu erzeugen; und
eine Verarbeitung, die konfiguriert ist, ein Interferenzsignal, das in dem Schwebungssignal enthalten ist, basierend auf dem Verarbeitungssignal und dem geglätteten Signal zu detektieren, wobei das Detektieren des Interferenzsignals auf einem Vergleich zwischen dem Verarbeitungssignal und dem geglätteten Signal basiert.

## Revendications

1. Dispositif de traitement de signal radar (100) comprenant :
une partie filtre (24) configurée pour générer un signal de traitement sur la base d'un signal de battement obtenu à partir d'un signal émis et d'un signal reçu et générer un signal lissé en filtrant le signal de traitement à l'aide d'un filtre de lissage dans un domaine temporel ; et
un détecteur (25) configuré pour détecter un signal d'interférence inclus dans le signal de battement sur la base du signal de traitement et du signal lissé, le détecteur (25) étant configuré pour détecter le signal d'interférence sur la base d'une comparaison entre le signal de traitement et le signal lissé.

2. Dispositif de traitement de signal radar (100) selon la revendication 1, dans lequel la partie filtre (24) est configurée pour modifier un réglage du filtre de lissage à partir d'une comparaison entre le signal lissé et le signal de traitement.

3. Dispositif de traitement de signal radar (100) selon la revendication 2, dans lequel la partie filtre (24) est configurée pour modifier le réglage du filtre de lissage afin de supprimer davantage une variation temporelle du signal lissé lorsqu'une variation du signal de traitement satisfait une condition particulière.

4. Dispositif de traitement de signal radar (100) selon l'une des revendications 1 à 3, dans lequel le détecteur (25) est configuré pour détecter le signal d'interférence, la comparaison étant basée sur une différence ou un rapport entre le signal de traitement et le signal lissé.

5. Dispositif de traitement de signal radar (100) selon l'une des revendications 1 à 4, comprenant en outre :
une partie de correction (26, 26A) configurée pour atténuer une amplitude du signal d'interférence.

6. Dispositif de traitement de signal radar (100) selon la revendication 5, dans lequel la partie de correction (26, 26A) est configurée pour atténuer une amplitude du signal de battement à un instant incluant le signal d'interférence en appliquant une fonction fenêtre (Wf) sur le signal de battement.

7. Dispositif de traitement de signal radar (100) selon l'une des revendications 1 à 6, dans lequel la partie filtre (24) est configurée pour déterminer une valeur moyenne (AvB) du signal de traitement à un moment particulier en tant que valeur initiale du signal lissé.

8. Dispositif de traitement de signal radar (100) selon l'une des revendications 1 à 7, dans lequel le filtre de lissage est un filtre IIR.

9. Dispositif radar (300) comprenant :
le dispositif de traitement de signal radar (100) selon l'une des revendications 1 à 8 ;
un émetteur (120) configuré pour émettre le signal émis ; et
un récepteur configuré pour recevoir un signal réfléchi qui est réfléchi par une cible.

10. Dispositif radar (300) selon la revendication 9, dans lequel
l'émetteur (120) est configuré pour émettre le signal émis via une antenne rotative (130), et
le récepteur (150) est configuré pour recevoir le signal réfléchi via une antenne rotative (140).

11. Procédé de traitement de signal radar comprenant :
la génération d'un signal de traitement sur la base d'un signal de battement obtenu à partir d'un signal émis et d'un signal reçu ;
la génération d'un signal lissé en filtrant le signal de traitement à l'aide d'un filtre de lissage dans un domaine temporel ; et
la détection d'un signal d'interférence inclus dans le signal de battement sur la base du signal de traitement et du signal lissé, dans lequel la détection du signal d'interférence est basée sur une comparaison entre le signal de traitement et le signal lissé.

12. Support non transitoire lisible par ordinateur stockant un programme de traitement de signal radar, le programme de traitement de signal radar étant configuré pour exécuter :
un traitement configuré pour générer un signal de traitement sur la base d'un signal de battement obtenu à partir d'un signal émis et d'un signal reçu ;
un traitement configuré pour générer un signal lissé en filtrant le signal de traitement à l'aide d'un filtre de lissage dans un domaine temporel ; et
un traitement configuré pour détecter un signal d'interférence inclus dans le signal de battement sur la base du signal de traitement et du signal lissé, dans lequel la détection du signal d'interférence est basée sur une comparaison entre le signal de traitement et le signal lissé.
